(19)

Europäisches
Patentamt
European
Patent Office
Office européen
des brevets

(11) **EP 4 637 164 A1**

(12) **EUROPEAN PATENT APPLICATION**

(43) Date of publication:
    **22.10.2025 Bulletin 2025/43**

(21) Application number: **24315189.1**

(22) Date of filing: **18.04.2024**

(51) International Patent Classification (IPC):
    ***H04N 21/442*** (2011.01)      ***H04N 21/443*** (2011.01)
    ***H04N 21/658*** (2011.01)

(52) Cooperative Patent Classification (CPC):
    **H04N 21/4436; H04N 21/44204; H04N 21/44222;**
    **H04N 21/4424; H04N 21/6582**

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH MA MD TN**

(71) Applicant: **InterDigital CE Patent Holdings, SAS**
    **75017 Paris (FR)**

(72) Inventors:
    • **Reinhard, Erik**
      **35630 HEDE-BAZOUGES (FR)**

    • **Demarty, Claire-Helene**
      **35520 MONTREUIL LE GAST (FR)**
    • **Blonde, Laurent**
      **35235 THORIGNE-FOUILLARD (FR)**
    • **Aumont, Franck**
      **35770 VERN SUR SEICHE (FR)**
    • **Le Meur, Olivier**
      **35160 TALENSAC (FR)**

(74) Representative: **Vossius & Partner**
    **Patentanwälte Rechtsanwälte mbB**
    **Siebertstraße 3**
    **81675 München (DE)**

(54)    **RETURN CHANNEL SUSTAINABILITY INFORMATION**

(57)    Methods and apparatus are provided for a reporting system by which content providers receive information from display devices, permitting content providers to determine their greenhouse gas emissions as well as their energy use. In one embodiment, display devices measure their own energy or power requirements, send reports to a content provider at the occurrence of an event or time period. A content provider receives reports from at least one display and aggregates individual reports into a cumulative report covering energy usage.

Figure 3

**EP 4 637 164 A1**

**Description**

TECHNICAL FIELD

At least one of the present embodiments generally relates to a method or an apparatus for estimation of energy requirements of display devices.

BACKGROUND

The general aspects described herein relate to approaches for estimating the energy requirements of display devices.

As part of the mitigation of climate change, the European Commission is increasingly requiring companies to report on their greenhouse gas emissions. To this end, three Scopes have been defined:

Scope 1 direct emissions, notably caused by company facilities and company vehicles.

Scope 2 indirect emissions, due to the purchase of electricity, steam, heating, and cooling for own use.

Scope 3 indirect emissions, due to emissions caused both upstream and downstream in the company's value chain. Scope 3 reporting is further broken down into a number of different classes - see Greenhouse Gas Protocol "Corporate Value Chain (Scope 3) Accounting and Reporting Standard", which is a supplement to the GHG Protocol Corporate Accounting and Reporting Standard.

The Scope 3 upstream activities include: purchased goods and services, capital goods, fuel- and energy-related activities not included in scope 1 or scope 2, upstream transportation and distribution, waste generated in operations, business travel, employee commuting, and upstream leased assets.

Scope 3 downstream activities include: downstream transportation and distribution, processing of sold products, use of sold products, end-of-life treatment of sold products, downstream leased assets, franchises, and investments.

According to dIMPACT (dIMPACT, "Methodology Statement", https://dimpact.org/publications), the Scope 3 categories relevant for content providers and media streaming companies are Cat 1, 'purchased goods and services', and Cat 11, 'use of products sold'.

SUMMARY

At least one of the present embodiments generally relates to a method or an apparatus for estimation of energy requirements of display devices.

According to a first aspect, there is provided a method. The method comprises steps for determining channel characteristics of a display of a television; resetting a frame count; determining the frame count corresponding to a start of at least one event; measuring information indicative of an energy metric and incrementing the frame count; determining that the at least one event has changed; sending a report to a content provider comprising the energy metric and the frame count; and, repeating said determining, measuring, determining, and sending steps until said television is turned off.

According to a second aspect, there is provided another method. The method comprises steps for receiving information comprising a first type of information from a display device; aggregating a first type of information; aggregating a second type of information if available; and generating at least one report comprising at least a first type of information.

According to another aspect, there is provided an apparatus. The apparatus comprises a processor and a memory. The processor can be configured to operate according to the aforementioned methods.

According to another aspect, there is provided an apparatus. The apparatus comprises a processor and a memory. The processor can be configured to encode or decode display data by executing any of the aforementioned methods.

According to another general aspect of at least one embodiment, there is provided a device comprising an apparatus according to any of the decoding embodiments; and at least one of (i) an antenna configured to receive a signal, the signal including the video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

BRIEF DESCRIPTION OF THE DRAWINGS

Figure 1 illustrates an example of a television operational flow chart.
Figure 2 illustrates a second example of a television operational flow chart.
Figure 3 illustrates a third example of a television operational flow chart.
Figure 4 illustrates an example of reports to send to a content provider.
Figure 5 illustrates broadcast-side flow chart for report management.
Figure 6 illustrates preparation of a report based on energy reporting.
Figure 7 illustrates preparation of a report based on power reporting.
Figure 8 illustrates one embodiment of an encoding method under the described aspects.
Figure 9 illustrates one embodiment of a decoding method under the described aspects.
Figure 10 illustrates one embodiment of an apparatus under the described aspects.
Figure 11 illustrates a standard, generic, video compression scheme.
Figure 12 illustrates a standard, generic, video decompression scheme.
Figure 13 illustrates a processor-based system for encoding/decoding under the general described aspects.

DETAILED DESCRIPTION

The described aspects relate to a method to enable display devices to report back to content providers their own features or their own energy/power consumption for the duration that a content provider's program was displayed.

When a content provider broadcasts a program, it will be displayed on a certain number of end-user display devices. For Scope 3 reporting purposes, it would be advantageous to have an estimate of the aggregate amount of energy used as a result. In an example relevant for this principles, consider a content provider sending out a program through digital terrestrial television (DTV). An end user device such as a television receiving the program will use energy to display the program material. Thus, a television that uses energy to display the program will cause emissions that are considered 'Scope 3, Cat 11 indirect use phase'. The reporting of such energy use by a content provider is currently extremely difficult.

Principles in an earlier work offer a first element/framework that will allow content providers to estimate their Scope 3, Cat 11 indirect use phase emissions. This principles can be used on its own, providing a coarse estimate of the Scope 3 energy use and greenhouse gas emissions caused by a content provider diffusing a program. It makes use of several estimates, such as the audience size, the type of displays deployed by its audience, etc. As these estimates are by necessity relatively imprecise, the idea of the current principles is to replace these estimates by data gathered directly, for example from the displays receiving program material.

The present principles propose a reporting system by which content providers receive information from display devices, permitting content providers to determine their Scope 3 greenhouse gas emissions as well as energy use. By using this principles, the accuracy of the reporting will be increased as rough estimates required in an earlier work are replaced by a data collection mechanism that provides accurate per-display data. This principles covers the following aspects:

Display devices should measure their own energy or power requirements.
Display devices should send a report back to the content provider at the end of each transmission, or at the end of a program, or when the user changes to a different channel, whichever comes first.

The content provider receives reports from any number of displays.

The content provider aggregates these individual reports into a report covering its total energy consumption and greenhouse gas emissions.

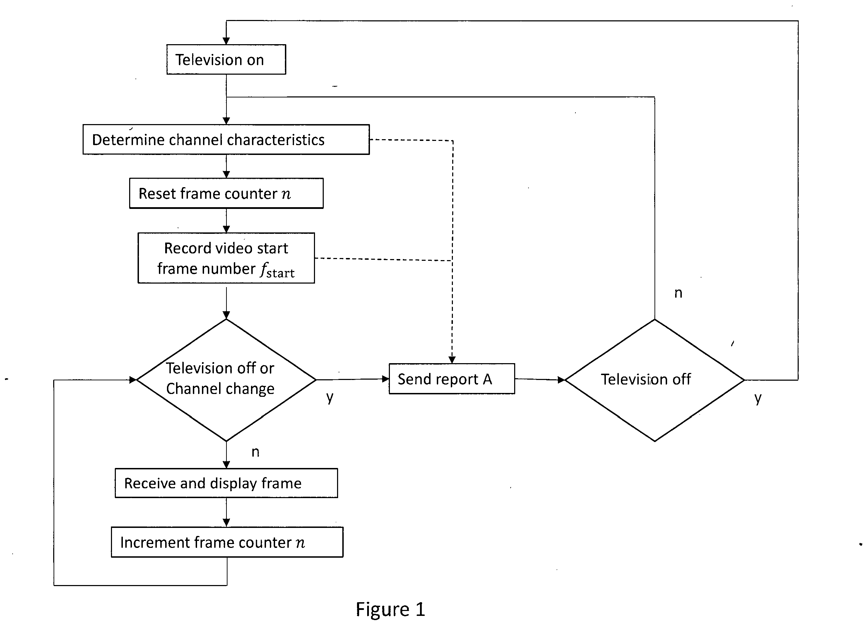

The principles is explained by means of a set of figures. Figures 1, 2 and 3 show three variants of a flow chart implementing the process to be followed by a display device, permitting such display device to measure its energy or power consumption, and sending back a report when this becomes necessary. The aim of Figures 1-3 is to show the timing of when a display should send a report, noting that it would equally be possible to send reports at other time intervals. For example, in an alternative embodiment, reports could be sent at regular intervals. In any case, the accuracy of the reporting is not affected by the frequency of sending reports, as long as they are sent. In the present principles it is therefore determined that the smallest number of reports sent is also the optimum number. This is achieved with the flow charts presented in Figures 1-3.

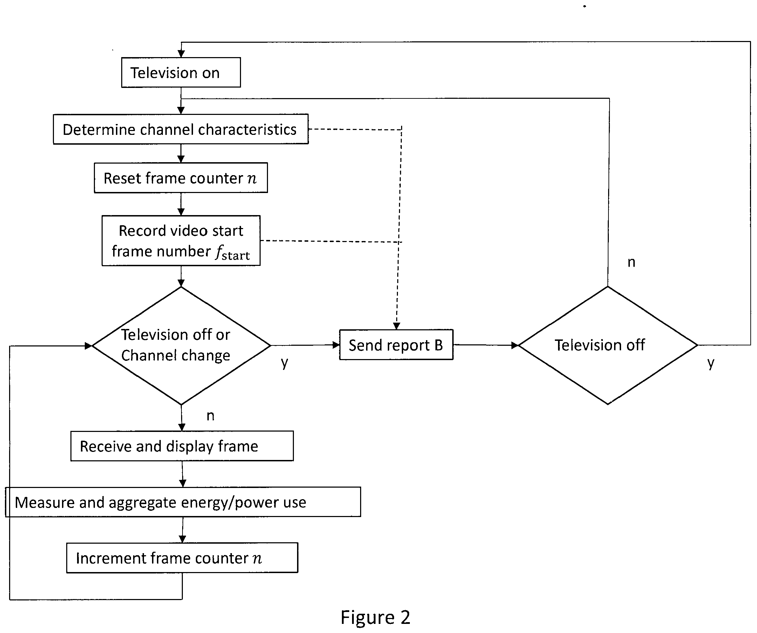

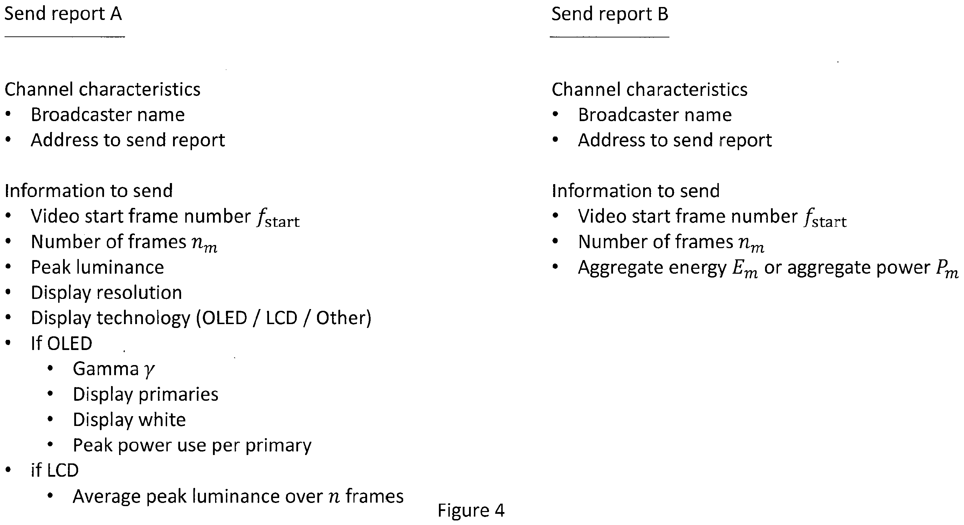

Figure 1 shows a flow chart implemented by a television for reporting of type A, whereas Figure 2 shows the same for reporting of type B (see below in the description of Figure 4). The aim of the two figures is to show at what point a report needs to be sent back to the content provider. This flow chart is designed such that the number of reports sent back from each display is as small as possible, e.g., only at the end of a program, when the television is switched off, or if a channel change occurs. Limiting the number of reports in this manner is beneficial to reduce the amount of data traffic generated for reporting purposes, and thereby limit the energy consumption associated with the reporting activity itself.

Other embodiments could require separate reports to be sent for program segments, for example between commercials, for commercial blocks or for individual commercials, in yet other embodiments the time intervals spans longer reporting periods such as for example a day, a week, a month, etc. In this case, a television would keep track of which channels are watched at which moments, collecting data for each channel individually, and periodically sending back reports.

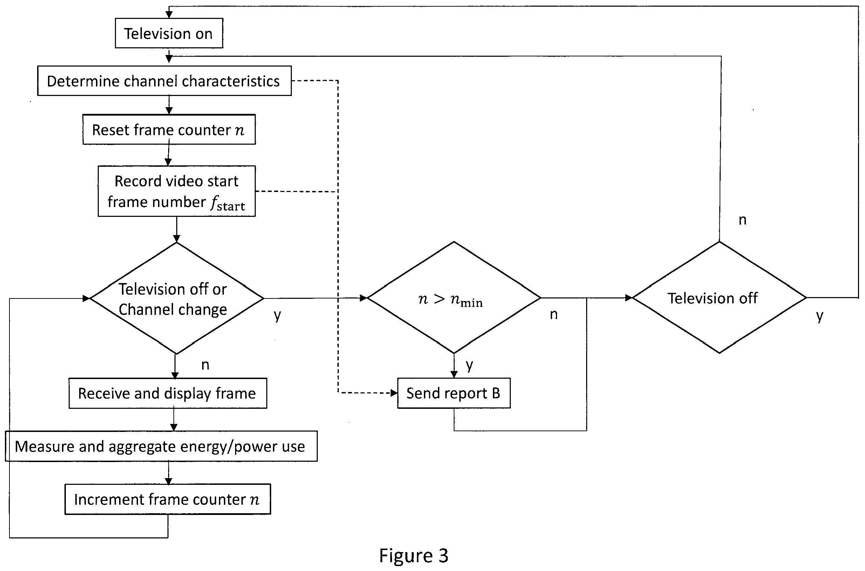

Figure 3 in addition counts the number of frames since the last occurrence of such an event and does not send a report if the time spent on a specific channel is less than a minimum number of frames $n_{min}$. This allows the number of reports to be reduced in the case that a viewer is zapping from channel to channel. While this figure shows this feature in combination with the production of a report of type B, it may equally apply to a report of type A.

For specific programs, the content provider may request a report covering this program duration from start to end, possibly to gather evidence to invoice back costs to a third party.

As shown in Figure 4, two types of report are envisaged:
One report type (type A) includes information describing display type, current setup of the television display, and the display capabilities, which a content provider could subsequently use to infer energy consumption.

The second report type (type B) omits such information, but instead directly reports the energy that was consumed, or the power that was drawn.

The rationale for including two report types is that one report type does not require additional metering hardware in each display device, which may be advantageous in terms of engineering cost, or even the purchase price of new televisions. The second report type is more accurate as it requires direct metering of energy consumption or power use. For display makers it has the advantage that no display-specific information would have to be transmitted. However, this solution likely comes at a price premium.

Both report types also include program / event-specific information, namely the first frame that was displayed, as well as the total number of frames included in the report. In an alternative embodiment this event-specific information could be replaced with a start frame / end frame combination, or with start and end time stamps. In each case, however, the information should enable the originator of the content to determine which period of the program is covered by the report in order to provide accurate estimates of total energy use.

Figure 4 shows the information required in each of the two report types A and B. It should be noted that elements from both reports could be combined to form other report types not further disclosed here. In addition, other information may be added to the reports, should this become necessary for increased reporting accuracy. For example, in a future scenario, the television may have access to information pertaining to the source of its energy supply. For example, if the source of electricity is a solar panel on the roof of the end user, then this may be flagged in the report. If the electricity used is from renewable sources, then this could equally be flagged in the report.

It is envisaged that the information is sent back to the content provider or streaming service (by the device itself or by a proxy connected device) either via a return channel, an IP network, a managed IP network, satellite uplink, mobile network, or any other appropriate means. While the aspects described here do not propose a specific syntax, the information to be sent back to the originator of the transmission could be encoded in a variety of different formats, either human readable or only machine readable. It would be possible, for example, to define the report as an XML message, a binary message with or without an ASCII or binary header. Further examples could follow HTML syntax, JSON syntax. It would be possible, for example, to augment the CMCD standard (Common Media Client Data), defined in CTA-5004 (https://cdn.cta.tech/cta/media/media/resources/standards/pdfs/cta-5004-final.pdf), with syntax appropriate for the reporting described here.

In addition to the features described above and in Figure 4, reports should be encoded in a secure manner so that the mechanism presented here cannot be used for attacks, and false reports can be detected and ignored. To this end, an encryption scheme could be employed.
Further, the reports sent back to the content provider should be sent in an anonymous manner, to protect the privacy of the owner of the reporting television. In particular, the report should not enable it to be linked back to personal information, account information, or any other information that could identify the viewer and/or link it with his/her viewing behavior. The only purpose of this principles is to provide more accurate energy reporting for content providers and streaming platforms.

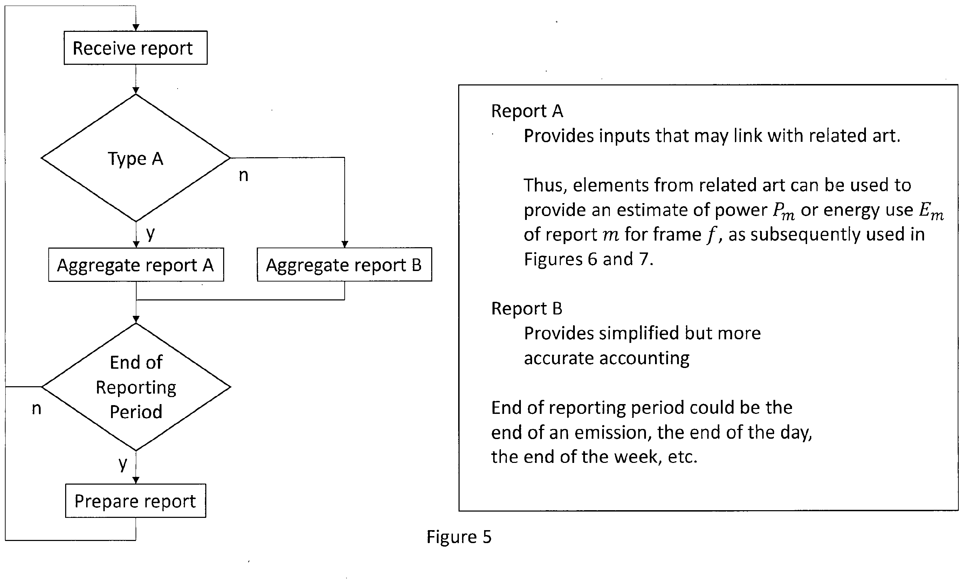

Figure 5 shows the flow chart to be implemented by the content provider for aggregating the reports received from each television. Note that this figure, and the described aspects in general, provide for two types of report. It should be understood that other report types may be defined in the future, and this would lead to straightforward amendments to the flowchart presented in Figure 5.

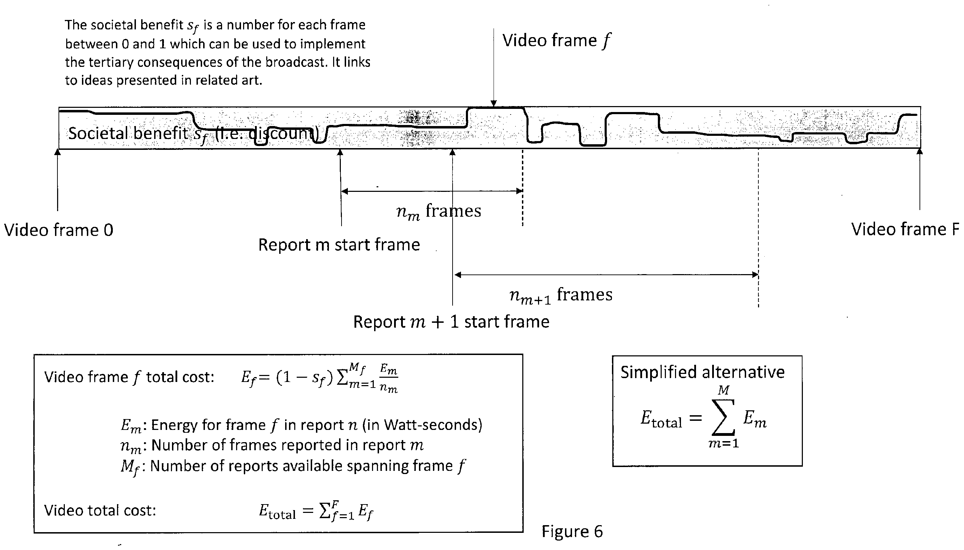

Figure 6 introduces the concept of societal benefit. This allows programs to be differentiated into categories which are more or less useful for society. For example, a program educating the public about climate change has a high societal benefit, whereas a commercial would probably have a low societal benefit. A classification system could be defined based on the content of various programs, which could be linked to the ideas presented in principles of an earlier work.

Figure 6 additionally shows how reports are aggregated into an energy value for each frame, and subsequently for the entire video. Variants are shown for including societal benefit into the equations, or not. The equations shown in Figure 6 show how for a given frame $f$ the reports are aggregated into a single energy value. While the equations suggest that the number of reports are known in advance, through the presence of parameter $M_f$, it should be noted that $E_f$ can be re-evaluated each time a new report is received. In this case, prior to transmission, $E_f$ and $E_{total}$ are set to zero. Upon reception of a report $m$, the value of $E_f$ is updated as follows:

$$dE_f = \left(1 - s_f\right)\frac{E_m}{n_m} \qquad \forall f \in [f_{\text{start}}, f_{\text{start}} + n_m]$$

$$E_f = E_f + dE_f \qquad \forall f \in [f_{\text{start}}, f_{\text{start}} + n_m]$$

$$E_{\text{total}} = E_{\text{total}} + dE_f \qquad \forall f \in [f_{\text{start}}, f_{\text{start}} + n_m]$$

where $f_{\text{start}}$ is the start frame as received in report $m$, and $n_m$ represents the number of frames displayed between the start frame and the event that triggered sending the report.

While Figure 6 shows reporting for a total of $F$ frames of a video, the period over which the reporting is accumulated could be a full program, a section of a program, an advertisement, a full day of emissions, or even longer reporting periods. It is noted that content providers will be able to correlate the frame numbers in each report to the content that was shown at any given time, and therefore to the type of content shown. For example, in this manner it would be possible to know the Scope 3 emissions associated with broadcasting an advertisement.

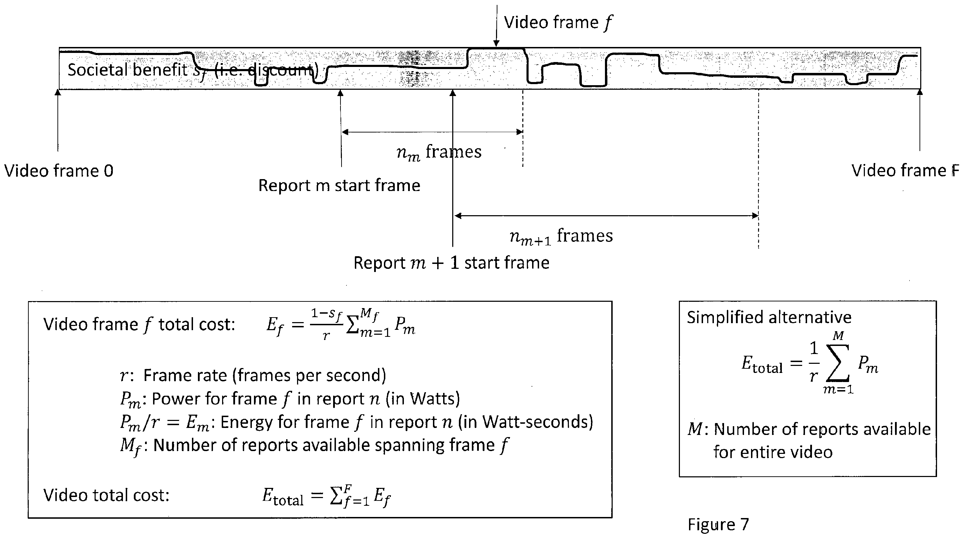

Finally, Figure 7 replicates Figure 6, but uses power rather than energy as the unit of measurement. The updates to power use, along with its conversion to energy can be structured analogously to the method presented above:

$$dE_f = \left(1 - s_f\right)\frac{P_m}{r} \qquad \forall f \in [f_{\text{start}}, f_{\text{start}} + n_m]$$

$$E_f = E_f + dE_f \qquad \forall f \in [f_{\text{start}}, f_{\text{start}} + n_m]$$

$$E_{\text{total}} = E_{\text{total}} + dE_f \qquad \forall f \in [f_{\text{start}}, f_{\text{start}} + n_m]$$

where r is the frame rate of the transmission (in frames per second).

The present principles can be used in conjunction with an earlier work, which presents a framework for estimating the energy consumption and greenhouse gas emissions of a broadcast. The present principles will replace estimates on display power consumption with accurate reporting. For those displays that do not have a return channel available to them, or for displays that do not implement the present principles, the method of an earlier work will continue to use its rough estimate of display energy consumption. The intention is that as more and more displays implement the present principles, the fraction of energy/greenhouse gas emissions estimated vs. reported will gradually go from 1 to 0.

The method allows content providers to estimate the energy consumption induced downstream, notably in end-user display devices more accurately than could be done with the initial principles of an earlier work. The initial principle in an earlier work is complemented with the current principles, so that reporting becomes more accurate. As the present principles requires standardization, this implies that those in an earlier work by proxy also requires standardization, if augmented with the present principles. The described aspects require the use of a return channel by which information from displays are sent to the content provider.

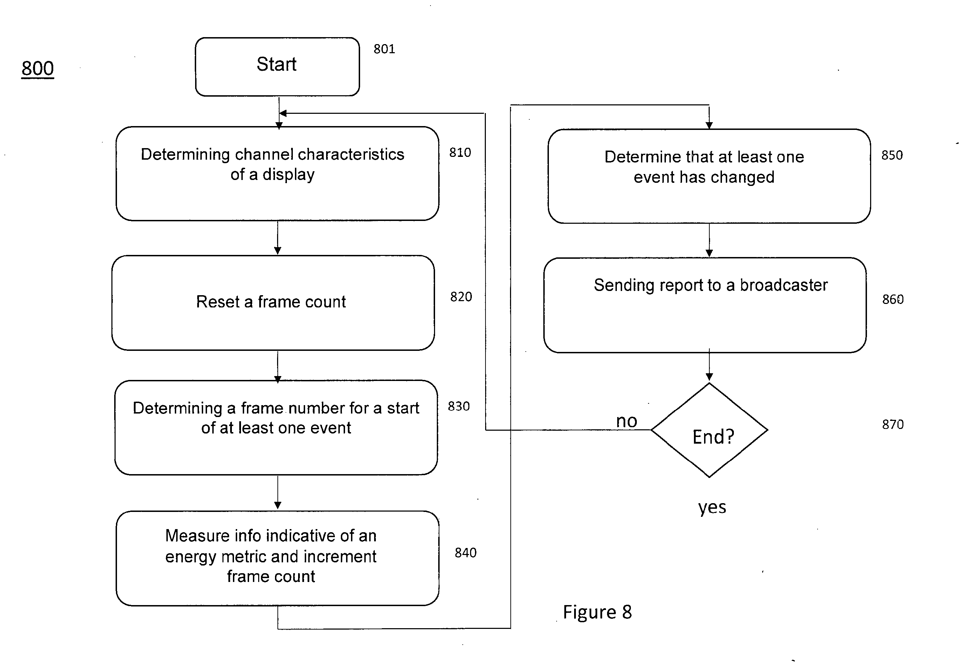

One embodiment of a method 800 under the general aspects described here is shown in Figure 8. The method commences at start block 801 and control proceeds from block 801 to block 810 for determining channel characteristics of a display of a television. Control proceeds from block 810 to block 820 for resetting a frame count. Control proceeds from block 820 to block 830 for determining the frame count corresponding to a start of at least one event. Control proceeds from block 830 to block 840 for measuring information indicative of an energy metric and incrementing the frame count. Control proceeds from block 840 to block 850 for determining that the at least one event has changed. Control proceeds from block 850 to block 860 for sending a report to a content provider comprising the energy metric and the frame count. Control proceeds from block 860 to block 870 for repeating said determining, measuring, determining, and sending steps until said television is turned off.

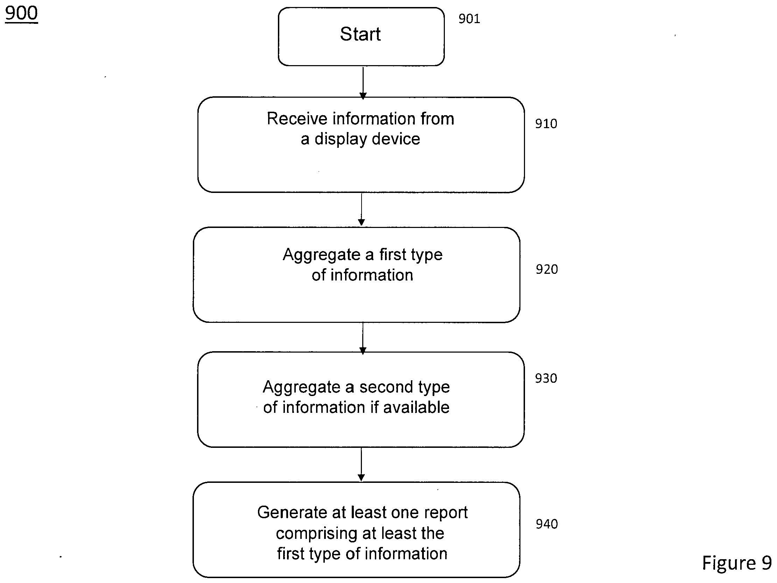

One embodiment of a method 900 under the general aspects described here is shown in Figure 9. The method commences at start block 901 and control proceeds to block 910 for receiving information comprising a first type of information from a display device. Control proceeds from block 910 to block 920 for aggregating a first type of information. Control proceeds from block 920 to block 930 for aggregating a second type of information if available. Control proceeds from block 930 to block 940 for generating at least one report comprising at least a first type of information.

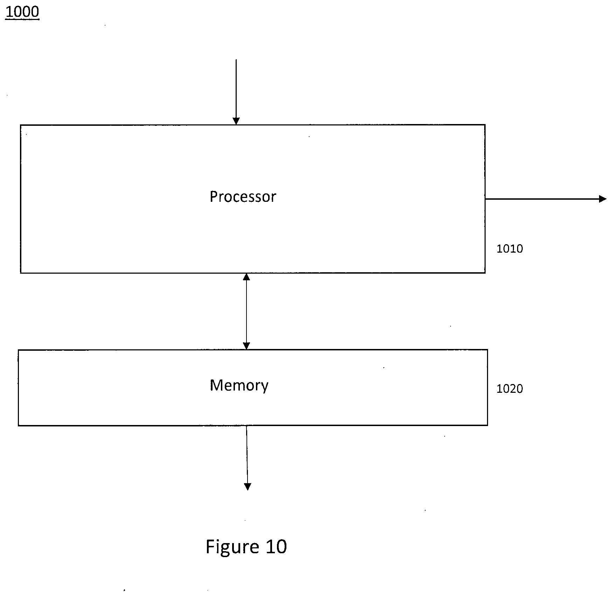

Figure 10 shows one embodiment of an apparatus 1000 for encoding, decoding, compressing, or decompressing, or filtering of video data using the aforementioned methods. The apparatus comprises Processor 1010 and can be interconnected to a memory 1020 through at least one port. Both Processor 1010 and memory 1020 can also have one or more additional interconnections to external connections.

Processor 1010 is also configured to either insert or receive information in a bitstream and, either compressing, encoding, or decoding using any of the described aspects.

The embodiments described here include a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

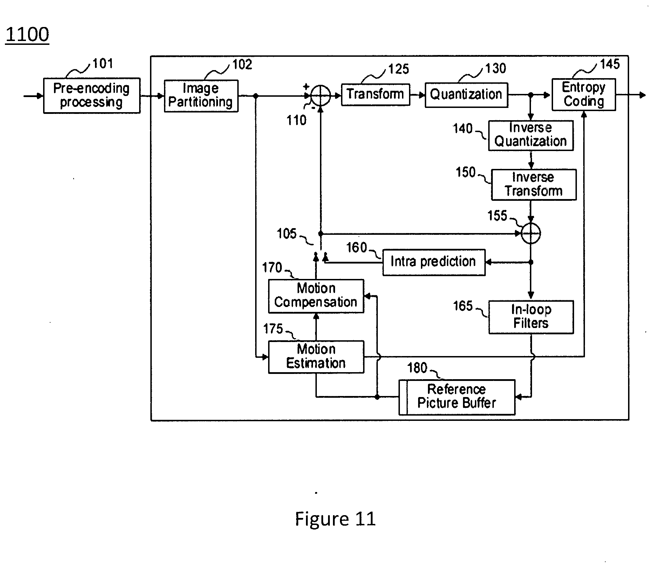

The aspects described and contemplated in this application can be implemented in many different forms. Figures 11, 12, and 13 provide some embodiments, but other embodiments are contemplated and the discussion of Figures 11, 12, and 13 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

While the invention is described in terms of video broadcasts and video streams, it would equally be possible to describe a substantially similar reporting structure for other media types. For example, the present invention relies on frame numbers and frame counters to determine to which section of the video a given report pertains. The same functionality can be obtained by using time stamps, time markers or time tags. An example is SMPTE time code, as defined in the SMPTE 12M-1 and SMPTE 12M-2 standards. Likewise, time stamps used in streaming protocols could be used to align the reporting with the chunks or segments created by such protocols. The use of time stamps further enables the invention to be used for audio and eventually other linear and nonlinear media types.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the intra prediction, entropy coding, and/or decoding modules (160, 260, 145, 230), of a video encoder 100 and decoder 200 as shown in Figure 6 and Figure 7. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application. The specific values are for example purposes and the aspects described are not limited to these specific values.

Figure 11 illustrates an encoder 100. Variations of this encoder 1100 are contemplated, but the encoder 1100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 1100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

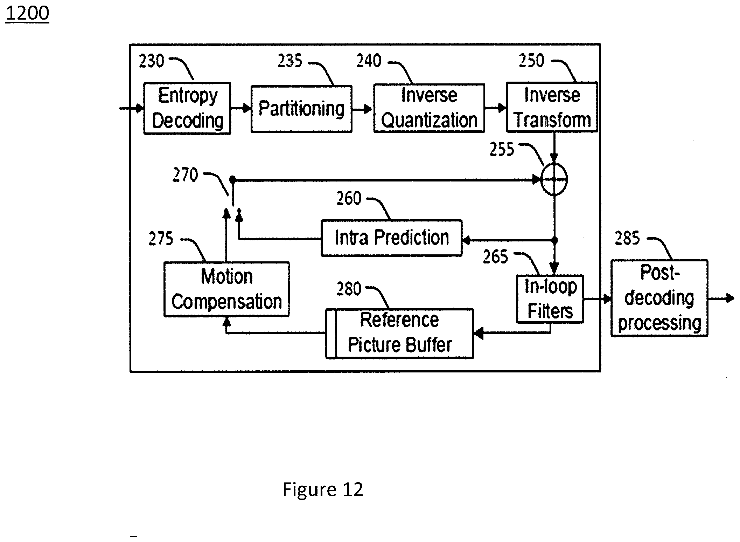

Figure 12 illustrates a block diagram of a video decoder 1200. In the decoder 1200, a bitstream is decoded by the decoder elements as described below. Video decoder 1200 generally performs a decoding pass reciprocal to the encoding pass as described in Figure 11. The encoder 1100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YcbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

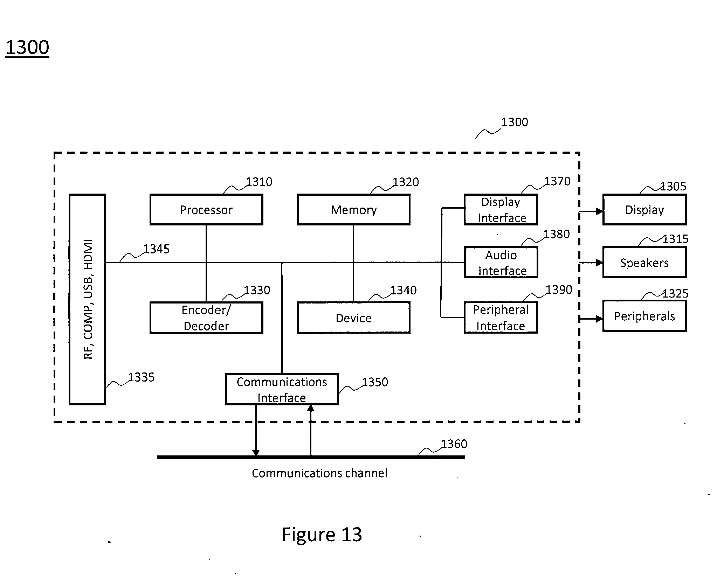

Figure 13 illustrates a block diagram of an example of a system in which various aspects and embodiments are implemented. System 1300 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 1300 can be provided through various input devices as indicated in block 1335. Such input devices include, but are not limited to, (i) a radio frequency (RF) portion that receives an RF signal transmitted, for example, over the air by a content provider, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 13, include composite video.

In various embodiments, the input devices of block 1335 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1335. Still other embodiments provide streamed data to the system 1300 using the RF connection of the input block 1335. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1305, speakers 1315, and other peripheral devices 1325. The display 1305 of various embodiments includes one or more of, for example, a touchscreen display, an organic light-emitting diode (OLED) display, a curved display, and/or a foldable display. The display 1305 can be for a television, a tablet, a laptop, a cell phone (mobile phone), or another device. The display 1305 can also be integrated with other components (for example, as in a smart phone), or separate (for example, an external monitor for a laptop). The other peripheral devices 1325 include, in various examples of embodiments, one or more of a stand-alone digital video disc (or digital versatile disc) (DVR, for both terms), a disk player, a stereo system, and/or a lighting system. Various embodiments use one or more peripheral devices 1325 that provide a function based on the output of the system 1300. For example, a disk player performs the function of playing the output of the system 1300.

In various embodiments, control signals are communicated between the system 1300 and the display 1305, speakers 1315, or other peripheral devices 1325 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1305 and speakers 1315 can be integrated in a single unit with the other components of system 1300 in an electronic device such as, for example, a television. In various embodiments, the display interface 1370 includes a display driver, such as, for example, a timing controller (T Con) chip.

The display 1305 and speaker 1315 can alternatively be separate from one or more of the other components, for example, if the RF portion of input 1335 is part of a separate set-top box. In various embodiments in which the display 1305 and speakers 1315 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination. Further, embodiments can include one or more of the following features, devices, or aspects, alone or in any combination, across various claim categories and types:

At least one embodiment comprises measuring data from a display device.

At least one embodiment comprises the above embodiment wherein measurements are taken over a specified interval or over the course of specified events.

At least one embodiment comprises the above embodiments wherein measurements are taken for a specified number of events.

. At least one embodiment comprises the above embodiments further comprising sending a report to a content provider.

At least one embodiment comprises receiving a report at a content provider, the report comprising information indicative of energy use of a display.

At least one embodiment comprises any encoding or decoding of the information based on the above operations.

At least one embodiment comprises a bitstream or signal that includes one or more of the described information elements, or variations thereof.

At least one embodiment comprises a bitstream or signal that includes syntax conveying information generated according to any of the embodiments described.

At least one embodiment comprises creating and/or transmitting and/or receiving and/or decoding according to any of the embodiments described.

At least one embodiment comprises a method, process, apparatus, medium storing instructions, medium storing data, or signal according to any of the embodiments described.

At least one embodiment comprises inserting in the signaling syntax elements that enable the decoder to determine decoding information in a manner corresponding to that used by an encoder.

At least one embodiment comprises creating and/or transmitting and/or receiving and/or decoding a bitstream or signal that includes one or more of the described syntax elements, or variations thereof.

At least one embodiment comprises a TV, set-top box, cell phone, tablet, or other electronic device that performs transform method(s) according to any of the embodiments described.

At least one embodiment comprises a TV, set-top box, cell phone, tablet, or other electronic device that performs transform method(s) determination according to any of the embodiments described, and that displays (e.g., using a monitor, screen, or other type of display) a resulting image.

At least one embodiment comprises a TV, set-top box, cell phone, tablet, or other electronic device that selects, bandlimits, or tunes (e.g., using a tuner) a channel to receive a signal including an encoded image, and performs transform method(s) according to any of the embodiments described.

At least one embodiment comprises a TV, set-top box, cell phone, tablet, or other electronic device that receives (e.g., using an antenna) a signal over the air that includes an encoded image, and performs transform method(s).

**Claims**

1. A method, comprising:

    determining channel characteristics of a display of a television;
    resetting a frame count;
    determining the frame count corresponding to a start of at least one event;
    measuring information indicative of an energy metric and incrementing the frame count;
    determining that the at least one event has changed;
    sending a report to a content provider comprising the energy metric and the frame count; and,
    repeating said determining, measuring, determining, and sending steps until said television is turned off.

2. An apparatus, comprising a memory and a processor, configured to:

    determine channel characteristics of a display of a television;
    reset a frame count;
    determine the frame count corresponding to a start of at least one event;
    measure information indicative of an energy metric and incrementing the frame count;
    determine that the at least one event has changed;
    send a report to a content provider comprising the energy metric and the frame count; and,
    repeat said determining, measuring, determining, and sending until said television is turned off.

3. A method, comprising:

    receiving information comprising a first type of information from a display device;
    aggregating a first type of information;
    aggregating a second type of information if available; and,
    generating at least one report comprising at least a first type of information.

4. An apparatus, comprising a memory and a processor, configured to:

    receive information comprising a first type of information from a display device;
    aggregate a first type of information;
    aggregate a second type of information if available; and,
    generate at least one report comprising at least a first type of information.

5. The method of Claim 3, or the apparatus of Claim 4, wherein said first type of information comprises information indicative of display.

6. The method of Claim 3, or the apparatus of Claim 4, wherein said second type of information comprises information indicative of energy of the display device.

7. The method of any one of Claims 1 or 3 or 5 through 6, or the apparatus of any one of Claims 2 or 4 through 6, wherein said information is aggregated for time intervals comprising between commercials, for commercial blocks or for individual commercials.

8. The method of any one of Claims 1 or 3 or 5 through 7 or the apparatus of any one of Claims 2 or 4 through 7, wherein information is not sent if time spent on a specific channel is less than a minimum number of frames.

9. The method of any one of Claims 1 or 3 or 5 through 8 or the apparatus of any one of Claims 2 or 4 through 8, wherein an event comprises a program, a commercial, or an interval of time.

10. The method of any one of Claims 1 or 3 or 5 through 9 or the apparatus of any one of Claims 2 or 4 through 9, wherein information comprises information indicative of a start and end frame number or time stamp.

11. The method of any one of Claims 1 or 3 or 5 through 9 or the apparatus of any one of Claims 2 or 4 through 9, wherein information is sent or received in a secured format.

12. A device comprising:

an apparatus according to Claim 2; and
at least one of (i) an antenna configured to receive a signal, the signal including a video block, (ii) a band limiter configured to limit the received signal to a band of frequencies that includes the video block, and (iii) a display configured to display an output representative of the video block.

13. A non-transitory computer readable medium containing data content generated according to the method of any one of claims 1, 3, or 5 through 11, or by the apparatus of any one of claims 2, 4, or 5 through 11, for playback using a processor.

14. A signal comprising video data generated according to the method of any one of claims 1, or 3, or 5 through 11, or by the apparatus of any one of claims 2, or 4, or 5 through 11, for playback using a processor.

15. A computer program product comprising instructions which, when the program is executed by a computer, cause the computer to carry out the method of any one of claims 1, or 3 or 5 through 11.

Figure 1

EP 4 637 164 A1

```
                    ┌─────────────────┐
                    │  Television on  │
                    └────────┬────────┘
                             │
          ┌──────────────────────────────────┐
          │ Determine channel characteristics│┄┄┄┄┄┄┄┄┄┄┄┐
          └──────────────────┬───────────────┘           ┊
                             │                            ┊
               ┌────────────────────────┐                ┊
               │  Reset frame counter n │                ┊
               └────────────┬───────────┘                ┊
                             │                            ┊
               ┌────────────────────────┐                ┊
               │    Record video start  │                ┊
               │  frame number f_start  │┄┄┄┄┄┄┄┄┄┄┄┄┄┄┄┤
               └────────────┬───────────┘                ┊
                             │                            ┊
                         ◇◇◇◇◇◇◇◇                         ┊
                    ◇◇◇            ◇◇◇                    ┊
                  ◇  Television off or ◇     y   ┌──────────────┐
                  ◇  Channel change    ◇─────────│Send report B │
                    ◇◇◇            ◇◇◇           └──────────────┘
                        ◇◇◇◇◇◇◇◇
                             │ n
               ┌────────────────────────┐
               │ Receive and display frame│
               └────────────┬───────────┘
                             │
        ┌──────────────────────────────────────┐
        │ Measure and aggregate energy/power use│
        └──────────────────┬───────────────────┘
                             │
               ┌────────────────────────┐
               │ Increment frame counter n│
               └────────────────────────┘
```

Figure 2

Television on

Determine channel characteristics

Reset frame counter $n$

Record video start
frame number $f_{start}$

Television off or
Channel change — y

$n > n_{min}$ — n

Television off — y

n

Receive and display frame — y — Send report B

Measure and aggregate energy/power use

Increment frame counter $n$

Figure 3

Send report A
_____

Channel characteristics
- Broadcaster name
- Address to send report

Information to send
- Video start frame number $f_{start}$
- Number of frames $n_m$
- Peak luminance
- Display resolution
- Display technology (OLED / LCD / Other)
- If OLED
    - Gamma $\gamma$
    - Display primaries
    - Display white
    - Peak power use per primary
- if LCD
    - Average peak luminance over $n$ frames

Send report B
_____

Channel characteristics
- Broadcaster name
- Address to send report

Information to send
- Video start frame number $f_{start}$
- Number of frames $n_m$
- Aggregate energy $E_m$ or aggregate power $P_m$

Figure 4

EP 4 637 164 A1

Receive report

Type A
n

y

Aggregate report A

Aggregate report B

End of
Reporting
Period

n

y

Prepare report

Report A
Provides inputs that may link with related art.

Thus, elements from related art can be used to provide an estimate of power $P_m$ or energy use $E_m$ of report $m$ for frame $f$, as subsequently used in Figures 6 and 7.

Report B
Provides simplified but more accurate accounting

End of reporting period could be the end of an emission, the end of the day, the end of the week, etc.

Figure 5

The societal benefit $s_f$ is a number for each frame
between 0 and 1 which can be used to implement
the tertiary consequences of the broadcast. It links
to ideas presented in related art.

Video frame $f$

Societal benefit $s_f$ (i.e. discount)

$n_m$ frames

Video frame 0

Report m start frame

Video frame F

$n_{m+1}$ frames

Report $m + 1$ start frame

Video frame $f$ total cost:  $E_f = (1 - s_f) \sum_{m=1}^{M_f} \frac{E_m}{n_m}$

$E_m$: Energy for frame $f$ in report $n$ (in Watt-seconds)
$n_m$: Number of frames reported in report $m$
$M_f$: Number of reports available spanning frame $f$

Video total cost:  $E_{total} = \sum_{f=1}^{F} E_f$

Simplified alternative

$$E_{total} = \sum_{m=1}^{M} E_m$$

Figure 6

EP 4 637 164 A1

Video frame F

Video frame f

Video frame 0

Societal benefit $s_f$ (i.e. discount)

Report m start frame

Report m + 1 start frame

$n_m$ frames

$n_{m+1}$ frames

Simplified alternative

$$E_{\text{total}} = \frac{1}{r}\sum_{m=1}^{M} P_m$$

M: Number of reports available for entire video

Video frame f total cost: $\qquad E_f = \frac{1-s_f}{r}\sum_{m=1}^{M_f} P_m$

r: Frame rate (frames per second)
$P_m$: Power for frame f in report n (in Watts)
$P_m/r = E_m$: Energy for frame f in report n (in Watt-seconds)
$M_f$: Number of reports available spanning frame f

Video total cost: $\qquad E_{\text{total}} = \sum_{f=1}^{F} E_f$

Figure 7

Figure 8

900

Start 901

Receive information from a display device 910

Aggregate a first type of information 920

Aggregate a second type of information if available 930

Generate at least one report comprising at least the first type of information 940

Figure 9

EP 4 637 164 A1

1000

Processor

1010

Memory

1020

Figure 10

Figure 11

1200

Figure 12

1300

Figure 13

Europäisches
Patentamt

European
Patent Office

Office européen
des brevets

## EUROPEAN SEARCH REPORT

**Application Number**

EP 24 31 5189

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Text of ISO/IEC FDIS 23001-11 Green Metadata", 110. MPEG MEETING; 20141020 - 20141024; STRASBOURG; (MOTION PICTURE EXPERT GROUP OR ISO/IEC JTC1/SC29/WG11), , no. n14853 18 November 2014 (2014-11-18), XP030270624, Retrieved from the Internet: URL:http://phenix.int-evry.fr/mpeg/doc_end _user/documents/110_Strasbourg/wg11/w14853 -v2-w14853.zip w14853-FDIS-text-of-ISO-IEC-23001-11.docx [retrieved on 2014-11-18] * pages 7,8; figure 1 * * pages 14-18 * | 1-15 | INV. H04N21/442 H04N21/443 H04N21/658 |

- - - - -

TECHNICAL FIELDS
SEARCHED     (IPC)

H04N

The present search report has been drawn up for all claims

| Place of search | Date of completion of the search | Examiner |
|---|---|---|
| Munich | 14 August 2024 | Folea, Octavian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)